# EUROPEAN PATENT APPLICATION

(11) **EP 4 465 686 A1**
(43) Date of publication of application: **20.11.2024**
(21) Application number: 22919427.9
(22) Date of filing: 13.01.2022
(51) Int. Cl.: H04W 24/10

(54) **INFORMATION REPORTING METHOD AND APPARATUS, INFORMATION RECEIVING METHOD AND APPARATUS, DEVICE, AND STORAGE MEDIUM**

(71) Applicant: Beijing Xiaomi Mobile Software Co., Ltd., Beijing 100085 (CN)
(72) Inventor: LI, Mingju, Beijing 100085 (CN)
(74) Representative: Dehns Germany Partnerschaft mbB
(86) International application number: PCT/CN2022/071849
(87) International publication number: WO 2023/133764

(57) **Abstract**

The present application relates to the field of mobile communications, and discloses an information reporting method and apparatus, an information receiving method and apparatus, a device, and a storage medium. The information reporting method comprises: a terminal transmits first channel state information to a network device, the first channel state information comprising differential information relative to second channel state information, and the transmission time of the second channel state information being earlier than the transmission time of the first channel state information. The channel state information transmitted this time is indicated by means of the differential information and the second channel state information located before the first channel state information, and there is no need to transmit complete channel state information, and thus, the signaling overhead is reduced.

## Description

### FIELD

The present disclosure relates to the field of mobile communication, and in particular, to a method, apparatus and device for reporting information, a method, apparatus and device for receiving information, and a storage medium.

### BACKGROUND

In the mobile communication technology, a network device can provide services for a terminal, and the terminal can report measured channel state information (CSI) to the network device to report the measurement result. However, due to the short feedback period of the CSI, the signaling overhead is large.

### SUMMARY

Embodiments of the present disclosure provide a method, apparatus and device for reporting information, a method, apparatus and device for receiving information, and a storage medium, with which channel state information sent this time is indicated through difference information and second channel state information before first channel state information, without need to send complete channel state information, thereby reducing signaling overhead. The technical solutions are as follows.

According to an aspect of the present disclosure, there is provided a method for reporting information. The method is performed by a terminal and includes: sending first channel state information to a network device. The first channel state information includes difference information relative to second channel state information, and a sending time of the second channel state information is earlier than a sending time of the first channel state information time.

According to an aspect of the present disclosure, there is provided a method for receiving information. The method is performed by a network device and includes: receiving first channel state information sent by a terminal. The first channel state information includes difference information relative to second channel state information, and a sending time of the second channel state information is earlier than a sending time of the first channel state information time.

According to an aspect of the present disclosure, there is provided an apparatus for reporting information. The apparatus includes a sending module. The sending module is configured to send first channel state information to a network device. The first channel state information includes difference information relative to second channel state information, and a sending time of the second channel state information is earlier than a sending time of the first channel state information time.

According to an aspect of the present disclosure, there is provided an apparatus for receiving information. The apparatus includes a receiving module. The receiving module is configured to receive first channel state information sent by a terminal. The first channel state information includes difference information relative to second channel state information, and a sending time of the second channel state information is earlier than a sending time of the first channel state information time.

According to an aspect of the present disclosure, there is provided a terminal. The terminal includes: a processor; a transceiver connected to the processor; and a memory for storing executable instructions of the processor. The processor is configured to load and execute the executable instructions to implement the method for reporting information as described in the above aspect.

According to an aspect of the present disclosure, there is provided a network device. The network device includes: a processor; a transceiver connected to the processor; and a memory for storing executable instructions of the processor. The processor is configured to load and execute the executable instructions to implement the method for receiving information as described in the above aspect.

According to an aspect of the present disclosure, there is provided a computer-readable storage medium having stored therein executable program codes that, when loaded and executed by a processor, cause the method for reporting information as described in the above aspect or the method for receiving information as described in the above aspect to be implemented.

According to an aspect of the present disclosure, there is provided a chip. The chip includes a programmable logic circuit and/or program instructions. The chip, when run on a terminal or a network device, causes the method for reporting information as described in the above aspect or the method for receiving information as described in the above aspect to be implemented.

According to an aspect of the present disclosure, there is provided a computer program product that, when executed by a processor of a terminal or a network device, cause the method for reporting information as described in the above aspect or the method for receiving information as described in the above aspect to be implemented.

In the method for reporting information according to embodiments of the present disclosure, the terminal indicates the channel state information through the difference information reported, that is, the terminal indicates the channel state information sent this time through the difference information and the second channel state information before the first channel state information, without need to send complete channel state information, thereby reducing signaling overhead.

### BRIEF DESCRIPTION OF THE DRAWINGS

In order to more clearly illustrate the technical solutions in embodiments of the present disclosure, the drawings that need to be used in the description of embodiments will be briefly introduced below. Apparently, the drawings in the following description only involve some embodiments of the present disclosure, and other drawings can be obtained by those skilled in the art according to these drawings without creative effort.
FIG. 1 shows a schematic block diagram of a communication system according to an illustrative embodiment of the present disclosure;
FIG. 2 shows a schematic flowchart of a method for reporting information according to an illustrative embodiment of the present disclosure;
FIG. 3 shows a schematic flowchart of another method for reporting information according to an illustrative embodiments of the present disclosure;
FIG. 4 shows a schematic flowchart of a method for receiving information according to an illustrative embodiments of the present disclosure;
FIG. 5 shows a schematic block diagram of an apparatus for reporting information according to an illustrative embodiment of the present disclosure;
FIG. 6 shows a schematic block diagram of an apparatus for receiving information according to an illustrative embodiment of the present disclosure; and
FIG. 7 shows a schematic block diagram of a communication device according to an illustrative embodiment of the present disclosure.

### DETAILED DESCRIPTION

In order to make the purposes, technical solutions and advantages of the present disclosure more clear, embodiments of the present disclosure will be further described in detail below with reference to the accompanying drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with the present disclosure. Instead, they are merely examples of apparatuses and methods consistent with some aspects of the present disclosure as recited in the appended claims.

Terms used in the present disclosure are only for the purpose of describing specific embodiments, but should not be construed to limit the present disclosure. As used in the present disclosure and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first," "second" and "third" may be used in embodiments of the present disclosure for describing various information, these information should not be limited by these terms. These terms are only used for distinguishing information of the same type from each other. For example, first information may also be referred to as second information, and similarly, the second information may also be referred to as the first information, without departing from the scope of embodiments of the present disclosure. As used herein, the term "if' may be construed to mean "when" or "upon" or "in response to determining" depending on the context.

In the following, application scenarios of the present disclosure are described.

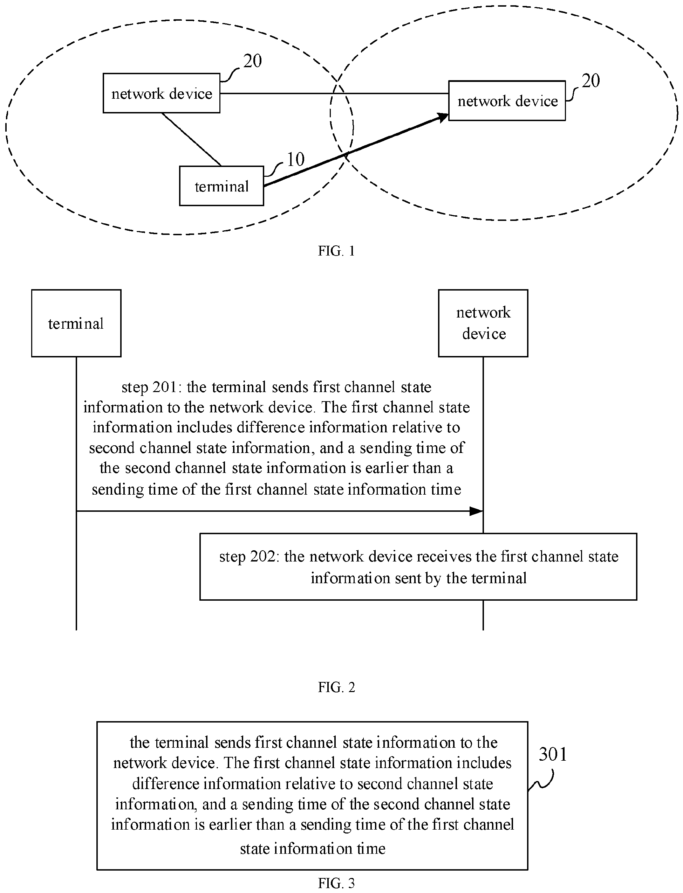

FIG. 1 shows a schematic block diagram of a communication system according to an illustrative embodiment of the present disclosure, the communication system may include: a terminal 10 and a network device 20.

There generally exist multiple terminals 10, and one or more terminals 10 may be distributed in a cell managed by each network device 20. The terminals 10 may include various devices with wireless communication functions, such as handheld devices, vehicle-mounted devices, wearable devices, computing devices or other processing devices connected to a radio modem, as well as various forms of user equipment (UEs), mobile stations (MSs) and so on. For convenience of description, in embodiments of the present disclosure, the above-mentioned devices are collectively referred to as terminals.

The network device 20 is a device deployed in an access network to provide a wireless communication function for the terminal 10. For the convenience of description, in embodiments of the present disclosure, the above-mentioned devices that provide the wireless communication function for the terminal 10 are collectively referred to as network devices. A connection can be established between the network device 20 and the terminal 10 through an air interface, so as to perform communications through this connection, including interactions of signaling and data. There may exist multiple network devices 20, and two adjacent network devices 20 may also communicate with each other in a wired or wireless manner. The terminal 10 can perform handover among different network devices 20. That is, the terminal 10 can establish connections with different network devices 20.

The network devices 20 may include various forms of macro base stations, micro base stations, relay stations, access points and so on. In systems using different radio access techniques, devices having the function of the network device may have different names, for example, in the 5G NR system, they are called gNodeB or gNB. With the evolution of the communication technology, the name "network device" may change.

FIG. 2 shows a schematic flowchart of a method for reporting information according to an illustrative embodiment of the present disclosure, which for example can be performed by the terminal and the network device as shown in FIG. 1, and includes at least some of the following contents.

In step 201, the terminal sends first channel state information to the network device. The first channel state information includes difference information relative to second channel state information, and a sending time of the second channel state information is earlier than a sending time of the first channel state information time.

In embodiments of the present disclosure, the terminal and the network device will interact with each other. The terminal performs a measurement based on channel state information-reference signal (CSI-RS) and/or a synchronization signal and PBCH block (SSB) send by the network device to obtain channel state information, and the terminal sends the first channel state information relative to the second channel state information to the network device, so as to indicate, by the difference information in the first channel state information, the channel state information obtained by measurement.

The sending time of the second channel state information is earlier than the sending time of first channel state information, so that the terminal can indicate the first channel state information by the difference information relative to the second channel state information.

In step 202, the network device receives the first channel state information sent by the terminal.

In embodiments of the present disclosure, the network device receives the first channel state information, and determines the channel state information of the terminal according to the difference information included in the first channel state information and the second channel state information.

In some embodiments, the channel state information-reference signal may be transmitted through multiple transmission modes, which for example include any of:
(1) periodical transmission;
(2) N times of transmissions in a period, where N is an integer greater than 0.
(3) aperiodic transmission;
(4) semi-persistent transmission.

In some embodiments, the channel state information is carried in a physical uplink control channel (PUCCH) and/or a physical uplink shared channel (PUSCH).

It should be noted that the step performed by the terminal in embodiments of the present disclosure may be implemented separately to form a new embodiment, and the step performed by the network device may be implemented separately to form a new embodiment.

In the method for reporting information according to embodiments of the present disclosure, the terminal indicates the channel state information through the difference information reported, that is, the terminal indicates the channel state information sent this time through the difference information and the second channel state information before the first channel state information, without need to send complete channel state information, thereby reducing signaling overhead.

On the basis of the embodiments shown in FIG. 2, the first channel state information also needs to indicate a position of the second channel state information.

In some embodiments, the first channel state information further includes first indication information, and the first indication information indicates that the second channel state information is N^{th} information before the first channel state information, where N is a positive integer greater than 0.

In embodiments of the present application, the sending time of the second channel state information is earlier than the sending time of the first channel state information, but within a time interval between the sending time of the second channel state information and the sending time of the first channel state information, there may exist other channel state information. In order to indicate which channel state information the difference information is relative to, the first indication information is used to indicate that the second channel state information is the N^{th} information before the first channel state information, where N is a positive integer greater than 0.

For example, the second channel state information is 1^{st} information before the first channel state information. For example, the second channel state information is 2^{nd} information before the first channel state information, that is, there exists one channel state information between the second channel state information and the first channel state information.

In the method according to embodiments of the present disclosure, a positional relationship between the second channel state information and the first channel state information can be indicated by the first indication information, and further the second channel state information can be determined, so that complete channel state information corresponding to the first channel state information sent this time is determined according to the second channel state information, and the transmission accuracy is improved.

On the basis of embodiments shown in FIG. 2, the terminal also reports whether a beam corresponding to the first channel state information is same as a beam corresponding to the second channel state information.

In some embodiments, the first channel state information further includes second indication information, and the second indication information indicates whether the beam corresponding to the first channel state information is same as the beam corresponding to the second channel state information.

In embodiments of the present application, the terminal needs to report the beam corresponding to the first channel state information. For this, the first channel state information includes the second indication information to indicate whether the beam corresponding to the first channel state information is same as the beam corresponding to the second channel state information. When the second indication information indicates that the beam corresponding to the first channel state information is same as the beam corresponding to the second channel state information, the beam corresponding to the first channel state information is the beam corresponding to the second channel state information.

Optionally, when the second indication information indicates that the beam corresponding to the first channel state information is different from the beam corresponding to the second channel state information, the terminal further needs to report the beam corresponding to the first channel state information. That is, in the case where the beam corresponding to the first channel state information is different from the beam corresponding to the second channel state information, the first channel state information further includes the beam corresponding to the first channel state information.

Optionally, the beam corresponding to the first channel state information is indicated by a parameter related to a number of antenna ports and/or a number of oversamplings.

The number of antenna ports is expressed as *N₁*N₂,* where *N₁* is a number of antenna ports in a first dimension, and *N₂* is a number of antenna ports in a second dimension. The number of oversamplings is expressed as *O₁***O₂*, where *O₁* is a number of oversamplings in a first dimension, and *O₂* is a number of oversamplings in a second dimension.

For example, the corresponding beam is indicated by the parameter related to the number of antenna ports and/or the number of oversamplings, and the parameter has a value range of 0 to *N₁***O₁*-1, 0 to *N₂*O₂*-1*,* 0 to *O₁***O₂*-1, 0 to *O₁*-1, 0 to *O₂*-1, 0 to *N₁*-1*,* 0 to *N₂*-1*,* 0 to *N₁**O₁/*2*-1, 0 to *N₂***O₂*/*2*-1, or 0 to (a number of combinations of *L* antenna ports selected from *N₁***N₂* antenna ports)-1, wherein L is an integer greater than 1.

In the method according to embodiments of the present disclosure, the terminal reports the second indication information to indicate whether the beam corresponding to the first channel state information is same as the beam corresponding to the second channel state information, so that the terminal can decide whether to re-report the beam corresponding to the first channel state information, so as to ensure the comprehensiveness of the channel state information reported by the terminal and improve the transmission performance.

On the basis of the embodiments shown in FIG. 2, the terminal also reports whether a frequency-domain base vector corresponding to the first channel state information is same as a frequency-domain base vector corresponding to the second channel state information.

In some embodiments, the first channel state information further includes third indication information, and the third indication information indicates whether the frequency-domain base vector corresponding to the first channel state information is same as the frequency-domain base vector corresponding to the second channel state information.

In embodiments of the present disclosure, the terminal needs to report the frequency-domain base vector corresponding to the first channel state information. For this, the first channel state information includes the third indication information to indicate whether the frequency-domain base vector corresponding to the first channel state information is same as the frequency-domain base vector corresponding to the second channel state information. When the third indication information indicates that the frequency-domain base vector corresponding to the first channel state information is same as the frequency-domain base vector corresponding to the second channel state information, the frequency-domain base vector corresponding to the first channel state information is the frequency-domain base vector corresponding to the second channel state information.

The frequency-domain base vector is a parameter value related to a subband corresponding to a channel quality indicator (CQI) and/or a subband corresponding to a precoding matrix indicator (PMI). For example, the frequency-domain base vector is same as the subband corresponding to the CQI, or is half of the subband corresponding to the CQI, or is 1/R, where R is an integer greater than 1.

Optionally, in a case where the frequency-domain base vector corresponding to the first channel state information is different from the frequency-domain base vector corresponding to the second channel state information, the first channel state information further includes the frequency-domain base vector corresponding to the first channel state information.

In the method according to embodiments of the present disclosure, the terminal reports the third indication information to indicate whether the frequency-domain base vector corresponding to the first channel state information is same as the frequency-domain base vector corresponding to the second channel state information, so that the terminal can decide whether to re-report the frequency-domain base vector corresponding to the first channel state information, so as to ensure the comprehensiveness of the channel state information reported by the terminal and improve the transmission performance.

On the basis of the embodiments shown in FIG. 2, the terminal also reports a first magnitude coefficient and/or a first phase coefficient corresponding to a selected beam and/or frequency-domain base vector.

In embodiments of the present disclosure, after the terminal determines the selected beam and/or frequency-domain base vector, it will also report the corresponding first magnitude coefficient and/or first phase coefficient.

### 1. Method for determining the first magnitude coefficient

In some embodiments, the first magnitude coefficient includes at least one second magnitude coefficient.

In embodiments of the present disclosure, the first magnitude coefficient indicates an magnitude of the selected beam and/or frequency-domain base vector, and includes at least one second magnitude coefficient, and the at least one second magnitude coefficient indicates the first magnitude coefficient.

Optionally, the first magnitude coefficient is a product of the at least one second magnitude coefficient.

In embodiments of the present disclosure, the first magnitude coefficient includes at least one second magnitude coefficient, and the product of the at least one second magnitude coefficient is determined as the first magnitude coefficient.

Optionally, the at least one second magnitude coefficient includes a wideband magnitude coefficient and/or a narrowband magnitude coefficient.

In embodiments of the present disclosure, for the at least one second magnitude coefficient, the at least one second magnitude coefficient may be the wideband magnitude coefficient or the narrowband magnitude coefficient, or include both the wideband magnitude coefficient and the narrowband magnitude coefficient.

Wideband refers to an entire bandwidth, an entire bandwidth corresponding to a cell, an entire bandwidth available to the terminal, an entire bandwidth used by the terminal, or an entire bandwidth configured for the terminal, such as a bandwidth corresponding to an activated band width part (BWP).

Narrowband refers to a subband formed by dividing the entire bandwidth into multiple subbands. For example, for a bandwidth having physical resource blocks (PRBs) numbered from 24 to 72, a subband has 4 PRBs or 8 PRBs; for a bandwidth having PRBs numbered from 73 to 144, a subband has 8 PRBs or 16 PRBs; for a bandwidth having PRBs numbered from 145 to 275, a subband has 16 PRBs or 32 PRBs. Further, a subband may be divided into multiple frequency-domain units or frequency-domain base vectors. Alternatively, the narrowband is the frequency-domain unit or the frequency-domain base vector.

Optionally, the at least one second magnitude coefficient includes at least one of a time point reference magnitude, a polarization reference magnitude, or a frequency-domain base vector magnitude.

In embodiments of the present disclosure, for a time-domain resource corresponding to the first channel state information, the time-domain resource includes multiple polarization directions, and the time point reference magnitude is the same for each of the multiple polarization directions. The polarization reference magnitude is the same for all frequency-domain base vectors in a polarization direction. However, the frequency-domain base vector magnitude is independent for the multiple frequency-domain base vectors corresponding to the time-domain resource.

It should be noted that, for the time-domain resource corresponding to the first channel state information, the time-domain resource corresponds to multiple polarization directions. For one of the multiple polarization directions, its corresponding polarization reference magnitude is a maximum time point reference magnitude, which is quantized as 1, and the frequency-domain base vector magnitudes corresponding to this polarization direction all are represented by difference values relative to the polarization reference magnitude. For each of other polarization directions, a polarization reference magnitude is assigned to this polarization direction, and the frequency-domain base vector magnitudes corresponding to this polarization direction all are represented by difference values relative to the assigned polarization reference magnitude.

That is to say, in a polarization direction, for each frequency-domain base vector magnitude, the frequency-domain base vector magnitude is a sum or a product of the polarization reference magnitude and a difference value corresponding to the frequency-domain base vector magnitude.

In some embodiments, when a strongest magnitude corresponding to the first channel state information is greater than a strongest magnitude corresponding to the second channel state information, the time point reference magnitude is determined.

In embodiments of the present disclosure, the terminal needs to compare the strongest magnitude corresponding to the first channel state information with the strongest magnitude corresponding to the second channel state information. If the strongest magnitude corresponding to the first channel state information is greater than the strongest magnitude corresponding to the second channel state information, the time point reference magnitude needs to be re-determined. If the strongest magnitude corresponding to the first channel state information is not greater than the strongest magnitude corresponding to the second channel state information, the strongest magnitude corresponding to the second channel state information is determined as the time point reference magnitude.

Optionally, the terminal reports 1 bit to indicate a magnitude relationship between the strongest magnitude corresponding to the first channel state information and the strongest magnitude corresponding to the second channel state information. For example, if the bit is 0, it means that the strongest magnitude corresponding to the first channel state information is greater than the strongest magnitude corresponding to the second channel state information; if the bit is 1, it means that the strongest magnitude corresponding to the first channel state information is not greater than the strongest magnitude corresponding to the second channel state information. Alternatively, if the bit is 0, it means that the strongest magnitude corresponding to the first channel state information is not greater than the strongest magnitude corresponding to the second channel state information; if the bit is 1, it means that the strongest magnitude corresponding to the first channel state information is greater than the strongest magnitude corresponding to the second channel state information.

### 2. Method for determining the first phase coefficient

In some embodiments, the first phase coefficient of the beam corresponding to the CSI-RS includes at least one second phase coefficient.

In embodiments of the present disclosure, the first phase coefficient indicates a phase corresponding to the selected beam and/or frequency-domain base vector, and includes at least one second phase coefficient, and the at least one second phase coefficient indicates the first magnitude coefficient.

Optionally, the first phase coefficient is a product of the at least one second phase coefficient.

In embodiments of the present disclosure, the first phase coefficient includes the at least one second phase coefficient, and the product of the at least one second phase coefficient is determined as the first phase coefficient.

Optionally, the at least one second phase coefficient includes a wideband phase coefficient and/or a narrowband phase coefficient.

In embodiments of the present disclosure, for the at least one second phase coefficient, the at least one second phase coefficient may be the wideband phase coefficient or the narrowband phase coefficient, or include both the wideband phase coefficient and the narrowband phase coefficient.

Wideband refers to an entire bandwidth, an entire bandwidth corresponding to a cell, an entire bandwidth available to the terminal, an entire bandwidth used by the terminal, or an entire bandwidth configured for the terminal, such as a bandwidth corresponding to an activated BWP.

Narrowband refers to a subband formed by dividing the entire bandwidth into multiple subbands. For example, for a bandwidth having physical resource blocks (PRBs) numbered from 24 to 72, a subband has 4 PRBs or 8 PRBs; for a bandwidth having PRBs numbered from 73 to 144, a subband has 8 PRBs or 16 PRBs; for a bandwidth having PRBs numbered from 145 to 275, a subband has 16 PRBs or 32 PRBs. Further, a subband may be divided into multiple frequency-domain units or frequency-domain base vectors. Alternatively, the narrowband is the frequency-domain unit or the frequency-domain base vector.

Optionally, the at least one second phase coefficient includes at least one of a time point reference phase, a polarization reference phase, or a frequency-domain base vector phase.

In embodiments of the present disclosure, for a time-domain resource corresponding to the first channel state information, the time-domain resource includes multiple polarization directions, and the time point reference phase is the same for each of the multiple polarization directions. The polarization reference phase is the same for all frequency-domain base vectors in a polarization direction. However, the frequency-domain base vector phase is independent for the multiple frequency-domain base vectors corresponding to the time-domain resource.

It should be noted that, for the time-domain resource corresponding to the first channel state information, the time-domain resource corresponds to multiple polarization directions. For one of the multiple polarization directions, its corresponding polarization reference phase is a maximum time point reference phase, which is 0, and the frequency-domain base vector phases corresponding to this polarization direction all are represented by difference values relative to the polarization reference phase. For each of other polarization directions, a polarization reference phase is assigned to this polarization direction, and the frequency-domain base vector phases corresponding to this polarization direction all are represented by difference values relative to the assigned polarization reference phase.

That is to say, in a polarization direction, for each frequency-domain base vector phase, the frequency-domain base vector phase is a sum or a product of the polarization reference phase and a difference value corresponding to the frequency-domain base vector phase.

Optionally, before determining the first phase coefficient, a phase corresponding to the strongest magnitude of the first channel state information and a phase corresponding to the strongest magnitude of the second channel state information are fed back.

In solutions according to embodiments of the present disclosure, the magnitude and/or phase of the beam can be indicated through the channel state information, so that the network device can acquire the magnitude and/or phase of the beam corresponding to the time-domain resource corresponding to each CSI-RS, the comprehensiveness of the channel state information reported by the terminal is ensured, and the transmission performance is improved.

It should be noted that the above embodiments can be split into new embodiments, or combined with other embodiments to form new embodiments. The present disclosure does not limit the combination manners of various embodiments.

FIG. 3 shows a schematic flowchart of another method for reporting information according to an illustrative embodiments of the present disclosure, which for example may be performed by the terminal as shown in FIG. 1, and includes at least some of the following contents.

In step 301, terminal sends first channel state information to a network device. The first channel state information includes difference information relative to second channel state information, and a sending time of the second channel state information is earlier than a sending time of the first channel state information time.

The process of the step 301 is similar to that of the above step 201, and will not be repeated here.

In some embodiments, the first channel state information further includes first indication information, and the first indication information indicates that the second channel state information is N^{th} information before the first channel state information, where N is an integer greater than 0.

In some embodiments, the first channel state information further includes second indication information, and the second indication information indicates whether a beam corresponding to the first channel state information is same as a beam corresponding to the second channel state information

Optionally, in a case where the beam corresponding to the first channel state information is different from the beam corresponding to the second channel state information, the first channel state information further includes the beam corresponding to the first channel state information.

Optionally, the beam corresponding to the first channel state information is indicated by a parameter related to a number of antenna ports and/or a number of oversamplings.

In some embodiments, the first channel state information further includes third indication information, and the third indication information indicates whether a frequency-domain base vector corresponding to the first channel state information is same as a frequency-domain base vector corresponding to the second channel state information.

Optionally, in a case where the frequency-domain base vector corresponding to the first channel state information is different from the frequency-domain base vector corresponding to the second channel state information, the first channel state information further includes the frequency-domain base vector corresponding to the first channel state information.

The first indication information, the second indication information, and the third indication information in embodiments of the present disclosure are similar to those described in the above embodiments, and are not repeated here.

In some embodiments, the first channel state information further includes a first magnitude coefficient and/or a first phase coefficient corresponding to a selected beam and/or frequency-domain base vector.

Optionally, the first magnitude coefficient includes at least one second magnitude coefficient.

Optionally, the first magnitude coefficient is a product of the at least one second magnitude coefficient.

Optionally, the at least one second magnitude coefficient includes a wideband magnitude coefficient and/or a narrowband magnitude coefficient.

Optionally, the at least one second magnitude coefficient includes at least one of a time point reference magnitude, a polarization reference magnitude, or a frequency-domain base vector magnitude.

In some embodiments, the first phase coefficient includes at least one second phase coefficient.

Optionally, the first phase coefficient is a product of the at least one second phase coefficient.

Optionally, the at least one second phase coefficient includes a wideband phase coefficient and/or a narrowband phase coefficient.

Optionally, the at least one second phase coefficient includes at least one of a time point reference phase, a polarization reference phase, or a frequency-domain base vector phase.

The solutions for determining the first magnitude coefficient and the first phase coefficient in embodiments of the present disclosure are similar to those in the above-mentioned embodiments, and will not be repeated here.

In the method for reporting information according to embodiments of the present disclosure, the terminal indicates the channel state information through the difference information reported, that is, the terminal indicates the channel state information sent this time through the difference information and the second channel state information before the first channel state information, without need to send complete channel state information, thereby reducing signaling overhead.

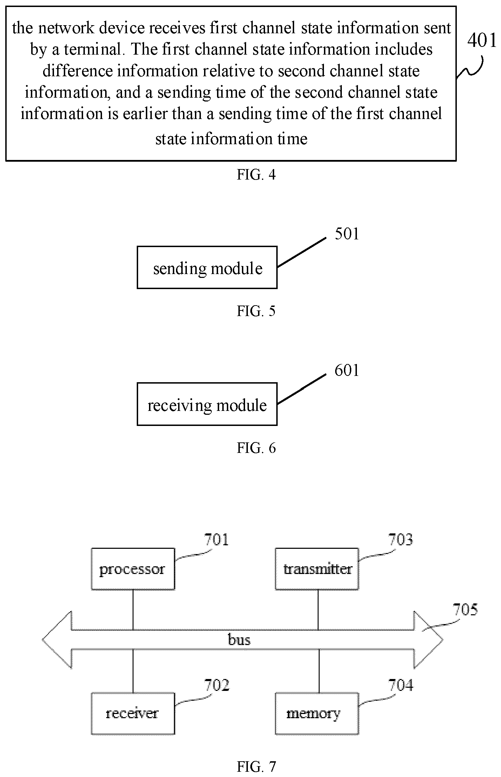

FIG. 4 shows a schematic flowchart of a method for receiving information according to an illustrative embodiments of the present disclosure, which for example may be performed by the network device as shown in FIG. 1, and includes at least some of the following contents.

In step 401, the network device receives first channel state information sent by a terminal. The first channel state information includes difference information relative to second channel state information, and a sending time of the second channel state information is earlier than a sending time of the first channel state information time.

The step 401 is similar to the step 202 in the above embodiments, and will not be repeated here.

In some embodiments, the first channel state information further includes first indication information, and the first indication information indicates that the second channel state information is N^{th} information before the first channel state information, where N is an integer greater than 0.

In some embodiments, the first channel state information further includes second indication information, and the second indication information indicates whether a beam corresponding to the first channel state information is same as a beam corresponding to the second channel state information

Optionally, in a case where the beam corresponding to the first channel state information is different from the beam corresponding to the second channel state information, the first channel state information further includes the beam corresponding to the first channel state information.

Optionally, the beam corresponding to the first channel state information is indicated by a parameter related to a number of antenna ports and/or a number of oversamplings.

In some embodiments, the first channel state information further includes third indication information, and the third indication information indicates whether a frequency-domain base vector corresponding to the first channel state information is same as a frequency-domain base vector corresponding to the second channel state information.

Optionally, in a case where the frequency-domain base vector corresponding to the first channel state information is different from the frequency-domain base vector corresponding to the second channel state information, the first channel state information further includes the frequency-domain base vector corresponding to the first channel state information.

The first indication information, the second indication information, and the third indication information in embodiments of the present disclosure are similar to those described in the above embodiments, and are not repeated here.

In some embodiments, the first channel state information further includes a first magnitude coefficient and/or a first phase coefficient corresponding to a selected beam and/or frequency-domain base vector.

Optionally, the first magnitude coefficient includes at least one second magnitude coefficient.

Optionally, the first magnitude coefficient is a product of the at least one second magnitude coefficient.

Optionally, the at least one second magnitude coefficient includes a wideband magnitude coefficient and/or a narrowband magnitude coefficient.

Optionally, the at least one second magnitude coefficient includes at least one of a time point reference magnitude, a polarization reference magnitude, or a frequency-domain base vector magnitude.

In some embodiments, the first phase coefficient includes at least one second phase coefficient.

Optionally, the first phase coefficient is a product of the at least one second phase coefficient.

Optionally, the at least one second phase coefficient includes a wideband phase coefficient and/or a narrowband phase coefficient.

Optionally, the at least one second phase coefficient includes at least one of a time point reference phase, a polarization reference phase, or a frequency-domain base vector phase.

The solutions for determining the first magnitude coefficient and the first phase coefficient in embodiments of the present disclosure are similar to those in the above-mentioned embodiments, and will not be repeated here.

In the method for reporting information according to embodiments of the present disclosure, the terminal indicates the channel state information through the difference information reported, that is, the terminal indicates the channel state information sent this time through the difference information and the second channel state information before the first channel state information, without need to send complete channel state information, thereby reducing signaling overhead.

FIG. 5 shows a schematic block diagram of an apparatus for reporting information according to an illustrative embodiment of the present disclosure. Referring to FIG. 5, the apparatus includes a sending module 501.

The sending module 501 is configured to send first channel state information to a network device. The first channel state information includes difference information relative to second channel state information, and a sending time of the second channel state information is earlier than a sending time of the first channel state information time.

In some embodiments, the first channel state information further includes first indication information, and the first indication information indicates that the second channel state information is N^{th} information before the first channel state information, where N is an integer greater than 0.

In some embodiments, the first channel state information further includes second indication information, and the second indication information indicates whether a beam corresponding to the first channel state information is same as a beam corresponding to the second channel state information

In some embodiments, in a case where the beam corresponding to the first channel state information is different from the beam corresponding to the second channel state information, the first channel state information further includes the beam corresponding to the first channel state information.

In some embodiments, the beam corresponding to the first channel state information is indicated by a parameter related to a number of antenna ports and/or a number of oversamplings.

In some embodiments, the first channel state information further includes third indication information, and the third indication information indicates whether a frequency-domain base vector corresponding to the first channel state information is same as a frequency-domain base vector corresponding to the second channel state information.

In some embodiments, in a case where the frequency-domain base vector corresponding to the first channel state information is different from the frequency-domain base vector corresponding to the second channel state information, the first channel state information further includes the frequency-domain base vector corresponding to the first channel state information.

In some embodiments, the first channel state information further includes a first magnitude coefficient and/or a first phase coefficient corresponding to a selected beam and/or frequency-domain base vector.

In some embodiments, the first magnitude coefficient includes at least one second magnitude coefficient.

In some embodiments, the first magnitude coefficient is a product of the at least one second magnitude coefficient.

In some embodiments, the at least one second magnitude coefficient includes a wideband magnitude coefficient and/or a narrowband magnitude coefficient.

In some embodiments, the at least one second magnitude coefficient includes at least one of a time point reference magnitude, a polarization reference magnitude, or a frequency-domain base vector magnitude.

In some embodiments, the first phase coefficient includes at least one second phase coefficient.

In some embodiments, the first phase coefficient is a product of the at least one second phase coefficient.

In some embodiments, the at least one second phase coefficient includes a wideband phase coefficient and/or a narrowband phase coefficient.

In some embodiments, the at least one second phase coefficient includes at least one of a time point reference phase, a polarization reference phase, or a frequency-domain base vector phase.

It should be noted that, in implementation of its functions, the apparatus according to the above embodiments are illustrated with the above division of the functional modules as examples. In practical applications, the above-mentioned functions may be allocated to different functional modules as needed. That is, the internal structure of the apparatus is divided into different functional modules to complete some or all of the functions described above. In addition, the apparatus according to the above embodiments has the identical conception to the method embodiments, so its specific implementations can refer to the method embodiments, and will not be repeated here.

FIG. 6 shows a schematic block diagram of an apparatus for receiving information according to an illustrative embodiment of the present disclosure. Referring to FIG. 6, the apparatus includes a receiving module 601.

The receiving module 601 is configured to receive first channel state information sent by a terminal. The first channel state information includes difference information relative to second channel state information, and a sending time of the second channel state information is earlier than a sending time of the first channel state information time.

In some embodiments, the first channel state information further includes first indication information, and the first indication information indicates that the second channel state information is N^{th} information before the first channel state information, where N is an integer greater than 0.

In some embodiments, the first channel state information further includes second indication information, and the second indication information indicates whether a beam corresponding to the first channel state information is same as a beam corresponding to the second channel state information

In some embodiments, in a case where the beam corresponding to the first channel state information is different from the beam corresponding to the second channel state information, the first channel state information further includes the beam corresponding to the first channel state information.

In some embodiments, the beam corresponding to the first channel state information is indicated by a parameter related to a number of antenna ports and/or a number of oversamplings.

In some embodiments, the first channel state information further includes third indication information, and the third indication information indicates whether a frequency-domain base vector corresponding to the first channel state information is same as a frequency-domain base vector corresponding to the second channel state information.

In some embodiments, in a case where the frequency-domain base vector corresponding to the first channel state information is different from the frequency-domain base vector corresponding to the second channel state information, the first channel state information further includes the frequency-domain base vector corresponding to the first channel state information.

In some embodiments, the first channel state information further includes a first magnitude coefficient and/or a first phase coefficient corresponding to a selected beam and/or frequency-domain base vector.

In some embodiments, the first magnitude coefficient includes at least one second magnitude coefficient.

In some embodiments, the first magnitude coefficient is a product of the at least one second magnitude coefficient.

In some embodiments, the at least one second magnitude coefficient includes a wideband magnitude coefficient and/or a narrowband magnitude coefficient.

In some embodiments, the at least one second magnitude coefficient includes at least one of: a time point reference magnitude, a polarization reference magnitude, or a frequency-domain base vector magnitude.

In some embodiments, the first phase coefficient includes at least one second phase coefficient.

In some embodiments, the first phase coefficient is a product of the at least one second phase coefficient.

In some embodiments, the at least one second phase coefficient includes a wideband phase coefficient and/or a narrowband phase coefficient.

In some embodiments, the at least one second phase coefficient includes at least one of a time point reference phase, a polarization reference phase, or a frequency-domain base vector phase.

It should be noted that, in functional implementation, the apparatus according to the above embodiments are illustrated with reference to the above division of the functional modules as examples. In practical applications, the above-mentioned functions may be allocated to different functional modules as needed. That is, the internal structure of the apparatus is divided into different functional modules to complete some or all of the functions described above. In addition, the apparatus according to the above embodiments has the identical conception to the method embodiments, so its specific implementations can refer to the method embodiments, and will not be repeated here.

FIG. 7 shows a schematic block diagram of a communication device according to an illustrative embodiment of the present disclosure, the communication device includes: a processor 701, a receiver 702, a transmitter 703, a memory 704 and a bus 705.

The processor 701 includes one or more processing cores, and the processor 701 executes various functional applications and information processing by running software programs and modules.

The receiver 702 and the transmitter 703 may be implemented as a communication component, and the communication component may be a communication chip.

The memory 704 is connected to the processor 701 via the bus 705.

The memory 704 may be used to store at least one program code, and the processor 701 is used to execute the at least one program code to implement various steps in the above method embodiments.

In addition, the communication device may be a terminal or a network device. The memory 704 may be implemented using any type of volatile or non-volatile memory devices, or a combination thereof, including but not limited to: a magnetic disk or an optical disk, an electrically erasable programmable read-only memory (EEPROM), an erasable programmable read-only memory (EPROM), a static random access memory (SRAM), a read-only memory (ROM), a magnetic memory, a flash memory, a programmable read-only memory (PROM) (PROM).

In illustrative embodiments, there is also provided a computer-readable storage medium having stored therein executable program codes that, when loaded and executed by a processor, cause the method for reporting information that is performed by a communication device as described in the above various method embodiments to be implemented.

In illustrative embodiments, there is provided a chip. The chip includes a programmable logic circuit and/or program instructions. The chip, when run on a terminal or a network device, causes the method for reporting information as described in the above various method embodiments to be implemented.

In illustrative embodiments, there is provided a computer program product that, when executed by a processor of a terminal or a network device, causes the method for reporting information as described in the above various method embodiments to be implemented.

It can be understood by those of ordinary skill in the art that some or all of the steps in the above embodiments may be implemented by hardware, or may be implemented by related hardware instructed by a program. The program may be stored in a computer-readable storage medium. The above-mentioned storage medium may be a read-only memory, a magnetic disk, an optical disk, or the like.

The above are only optional embodiments of the present disclosure, and are not intended to limit the present disclosure. Any modifications, equivalent replacements, or improvements made within the spirit and principles of the present disclosure shall be included in the protection scope of the present disclosure.

## Claims

1. A method for reporting information, performed by a terminal, comprising:
sending first channel state information to a network device, wherein the first channel state information comprises difference information relative to second channel state information, and a sending time of the second channel state information is earlier than a sending time of the first channel state information time.

2. The method according to claim 1, wherein the first channel state information further comprises first indication information, and the first indication information indicates that the second channel state information is N^{th} information before the first channel state information, where N is an integer greater than 0.

3. The method according to claim 1, wherein the first channel state information further comprises second indication information, and the second indication information indicates whether a beam corresponding to the first channel state information is same as a beam corresponding to the second channel state information.

4. The method according to claim 3, wherein in a case where the beam corresponding to the first channel state information is different from the beam corresponding to the second channel state information, the first channel state information further comprises the beam corresponding to the first channel state information.

5. The method according to claim 4, wherein the beam corresponding to the first channel state information is indicated by a parameter related to a number of antenna ports and/or a number of oversamplings.

6. The method according to claim 1, wherein the first channel state information further comprises third indication information, and the third indication information indicates whether a frequency-domain base vector corresponding to the first channel state information is same as a frequency-domain base vector corresponding to the second channel state information.

7. The method according to claim 6, wherein in a case where the frequency-domain base vector corresponding to the first channel state information is different from the frequency-domain base vector corresponding to the second channel state information, the first channel state information further comprises the frequency-domain base vector corresponding to the first channel state information.

8. The method according to claim 1, wherein the first channel state information further comprises a first magnitude coefficient and/or a first phase coefficient corresponding to a selected beam and/or frequency-domain base vector.

9. The method of claim 8, wherein the first magnitude coefficient comprises at least one second magnitude coefficient.

10. The method according to claim 9, wherein the first magnitude coefficient is a product of the at least one second magnitude coefficient.

11. The method according to claim 9 or 10, wherein the at least one second magnitude coefficient comprises a wideband magnitude coefficient and/or a narrowband magnitude coefficient.

12. The method according to claim 10, wherein the at least one second magnitude coefficient comprises at least one of: a time point reference magnitude, a polarization reference magnitude, or a frequency-domain base vector magnitude.

13. The method of claim 8, wherein the first phase coefficient comprises at least one second phase coefficient.

14. The method of claim 13, wherein the first phase coefficient is a product of the at least one second phase coefficient.

15. The method according to claim 13 or 14, wherein the at least one second phase coefficient comprises a wideband phase coefficient and/or a narrowband phase coefficient.

16. The method according to claim 14, wherein the at least one second phase coefficient comprises at least one of: a time point reference phase, a polarization reference phase, or a frequency-domain base vector phase.

17. A method for receiving information, performed by a network device, comprising:
receiving first channel state information sent by a terminal, wherein the first channel state information comprises difference information relative to second channel state information, and a sending time of the second channel state information is earlier than a sending time of the first channel state information time.

18. The method according to claim 17, wherein the first channel state information further comprises first indication information, and the first indication information indicates that the second channel state information is N^{th} information before the first channel state information, where N is an integer greater than 0.

19. The method according to claim 17, wherein the first channel state information further comprises second indication information, and the second indication information indicates whether a beam corresponding to the first channel state information is same as a beam corresponding to the second channel state information.

20. The method according to claim 19, wherein in a case where the beam corresponding to the first channel state information is different from the beam corresponding to the second channel state information, the first channel state information further comprises the beam corresponding to the first channel state information.

21. The method according to claim 20, wherein the beam corresponding to the first channel state information is indicated by a parameter related to a number of antenna ports and/or a number of oversamplings.

22. The method according to claim 17, wherein the first channel state information further comprises third indication information, and the third indication information indicates whether a frequency-domain base vector corresponding to the first channel state information is same as a frequency-domain base vector corresponding to the second channel state information.

23. The method according to claim 22, wherein in a case where the frequency-domain base vector corresponding to the first channel state information is different from the frequency-domain base vector corresponding to the second channel state information, the first channel state information further comprises the frequency-domain base vector corresponding to the first channel state information.

24. The method according to claim 17, wherein the first channel state information further comprises a first magnitude coefficient and/or a first phase coefficient corresponding to a selected beam and/or frequency-domain base vector.

25. The method of claim 24, wherein the first magnitude coefficient comprises at least one second magnitude coefficient.

26. The method according to claim 25, wherein the first magnitude coefficient is a product of the at least one second magnitude coefficient.

27. The method according to claim 25 or 26, wherein the at least one second magnitude coefficient comprises a wideband magnitude coefficient and/or a narrowband magnitude coefficient.

28. The method according to claim 26, wherein the at least one second magnitude coefficient comprises at least one of: a time point reference magnitude, a polarization reference magnitude, or a frequency-domain base vector magnitude.

29. The method of claim 24, wherein the first phase coefficient comprises at least one second phase coefficient.

30. The method of claim 29, wherein the first phase coefficient is a product of the at least one second phase coefficient.

31. The method according to claim 29 or 30, wherein the at least one second phase coefficient comprises a wideband phase coefficient and/or a narrowband phase coefficient.

32. The method according to claim 30, wherein the at least one second phase coefficient comprises at least one of: a time point reference phase, a polarization reference phase, or a frequency-domain base vector phase.

33. An apparatus for reporting information, comprising:
a sending module, configured to send first channel state information to a network device, wherein the first channel state information comprises difference information relative to second channel state information, and a sending time of the second channel state information is earlier than a sending time of the first channel state information time.

34. An apparatus for receiving information, comprising:
a receiving module, configured to receive first channel state information sent by a terminal, wherein the first channel state information comprises difference information relative to second channel state information, and a sending time of the second channel state information is earlier than a sending time of the first channel state information time.

35. A terminal, comprising:
a processor; and
a transceiver, connected to the processor,
wherein the processor is configured to load and execute executable instructions to implement the method for reporting information according to any one of claims 1 to 16.

36. A network device, comprising:
a processor; and
a transceiver, connected to the processor,
wherein the processor is configured to load and execute executable instructions to implement the method for receiving information according to any one of claims 17 to 32.

37. A computer-readable storage medium, having stored therein executable program codes that, when loaded and executed by a processor, cause the method for reporting information according to any one of claims 1 to 16 or the method for receiving information according to any one of claims 17 to 32 to be implemented.

38. A computer program product that, when executed by a processor of a terminal or a network device, cause the method for reporting information according to any one of claims 1 to 16 or the method for receiving information according to any one of claims 17 to 32 to be implemented.
